Europäisches Patentamt

(19) European Patent Office

Office européen des brevets

(11) Numéro de publication : **0 300 869 B1**

(12) **FASCICULE DE BREVET EUROPEEN**

(45) Date de publication du fascicule du brevet :
18.09.91 Bulletin 91/38

(51) Int. Cl.⁵ : **B60G 17/04**

(21) Numéro de dépôt : 88401762.5

(22) Date de dépôt : 06.07.88

(54) **Dispositif de commande de hauteur automatique et manuel.**

(30) Priorité : 09.07.87 FR 8710091

(43) Date de publication de la demande :
25.01.89 Bulletin 89/04

(45) Mention de la délivrance du brevet :
18.09.91 Bulletin 91/38

(84) Etats contractants désignés :
DE GB IT

(56) Documents cités :
DE-A- 1 630 029
DE-A- 2 442 682
FR-A- 2 145 374
FR-A- 2 584 659
US-A- 4 155 273
US-A- 4 449 420

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Deroche, Gabriel**
**3, rue Huraut**
**93250 Villemomble (FR)**

(74) Mandataire : **Boivin, Claude**
**9, rue Edouard-Charton**
**F-78000 Versailles (FR)**

EP 0 300 869 B1

Jouve, 18, rue Saint-Denis, 75001 PARIS

**Description**

La présente invention concerne un dispositif de commande de hauteur à la fois automatique et manuel pour véhicule automobile à suspension hydropneumatique.

En général les suspensions hydropneumatiques comportent par essieu un correcteur de hauteur à tiroir hydraulique temporisé, propre par déplacement du tiroir, de part et d'autre d'une position neutre de référence, à relier le circuit hydraulique de suspension à une source de pression ou à un réservoir de manière à modifier la hauteur de l'essieu, le circuit de suspension étant isolé à la fois de la source de pression et du réservoir lorsque le tiroir est dans sa position neutre, un levier monté pivotant en fonction de la hauteur de l'essieu, des moyens élastiques interposés entre le levier et le tiroir et des moyens manuels de commande agissant sur les moyens élastiques pour modifier la distance entre le tiroir et le levier.

Si la hauteur du véhicule se modifie, le levier déplace le tiroir, au bout d'un laps de temps donné, de sorte que le circuit de suspension est mis en communication avec la source de pression ou le réservoir, selon le cas, jusqu'à ce que, le véhicule ayant repris sa hauteur initiale, le tiroir se trouve de nouveau dans sa position neutre et n'est plus soumis à un effort de la part du levier. En modifiant la distance entre le tiroir et le levier, on fait varier la hauteur de référence du véhicule. Un dispositif de commande de hauteur de ce genre est décrit dans le document FR-A-2584659.

Les moyens manuels de commande sont situés au poste de conduite du véhicule et il n'est pas toujours possible de libérer l'espace qui sépare ces moyens de commande des moyens élastiques pour y installer une tringlerie de liaison.

La présente invention a pour objet un dispositif de commande de hauteur qui remédie à cette difficulté et présente l'avantage d'avoir une grande précision dans le réglage de la hauteur. Ce dispositif de commande est caractérisé en ce que le levier et le tiroir sont reliés l'un à l'autre par un boîtier élastique précontraint qui est relié par des rotules au tiroir du correcteur de hauteur et au levier et qui comprend un corps et une came cylindrique pouvant pivoter et coulisser l'un par rapport à l'autre et liés l'un à l'autre par des moyens tels qu'un pivotement de la came entraîne son coulissement, et en ce qu'il est prévu pour chaque essieu deux câbles dont chacun est fixé par l'une de ses extrémités à la périphérie d'un tambour manœuvré manuellement et par son autre extrémité à la périphérie de la came cylindrique.

On a décrit ci-après, à titre d'exemple non limitatif, un mode de réalisation du dispositif selon l'invention, avec référence aux dessins annexés dans lesquels :

La Figure 1 est une vue schématique du dispositif en position de repos ;

La Figure 2 est une vue en coupe axiale des moyens manuels de commande suivant II-II de la Figure 3 ;

La Figure 3 en est une vue en coupe transversale suivant III-III de la Figure 2 ;

La Figure 4 en est une vue par dessus ;

La Figure 5 est une vue en coupe longitudinale montrant le correcteur de hauteur et le boîtier élastique ;

La Figure 6 en est une vue en coupe suivant VI-VI de la Figure 5 ;

La Figure 7 est un développé de la came cylindrique du boîtier ;

La Figure 8 montre un détail de la liaison entre le correcteur et le boîtier élastique.

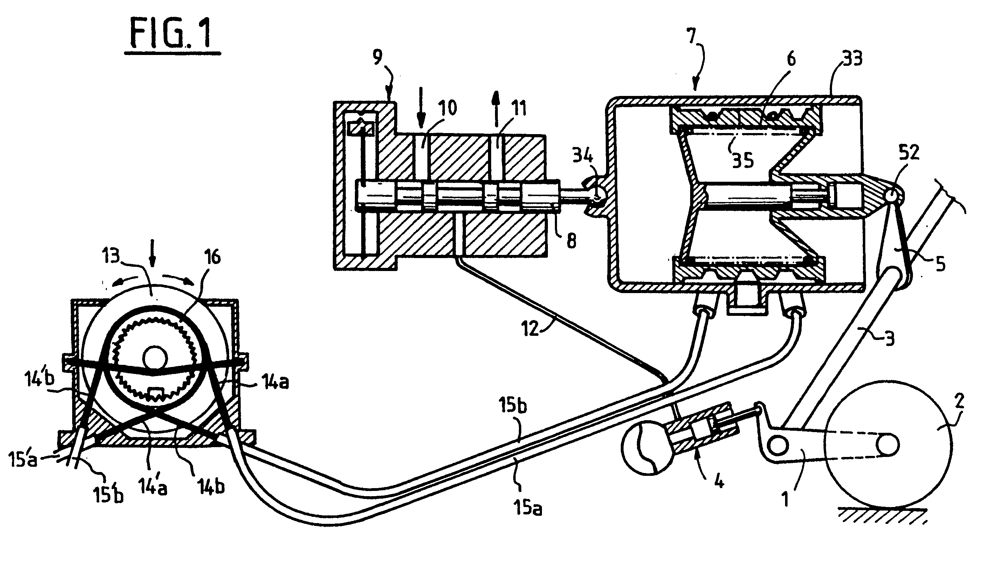

Le dispositif de commande de hauteur selon l'invention est destiné à un véhicule à suspension hydropneumatique comportant pour chaque essieu un correcteur de hauteur à tiroir hydraulique temporisé, propre par ses déplacements de part et d'autre d'une position neutre de référence à modifier la hauteur de cet essieu. A la Figure 1, on voit un bras 1 qui supporte une roue 2 et est fixé à l'une des extrémités d'une barre de torsion anti-devers 3 montée pivotante par rapport à la structure du véhicule. Ce bras est relié à cette structure par un vérin hydropneumatique 4. L'autre extrémité de la barre 3 est reliée de manière analogue à la roue opposée ; l'ensemble constitue l'un des deux essieux d'un véhicule.

Une patte 5 est ancrée au point milieu de la barre 3. Cette patte est reliée par un boîtier de longueur variable 7 comportant un ressort 6 au tiroir 8 d'un distributeur hydraulique 9 formant correcteur de hauteur. Ce distributeur communique par un perçage 10 avec une source de haute pression, par un perçage 11 avec un réservoir et par un conduit 12 avec les deux vérins 4 d'un même essieu.

Une variation de la hauteur du véhicule provoque par l'intermédiaire du bras de suspension 1 un pivotement de la barre anti-devers 3 autour de son axe. Cette barre entraîne le levier 5 qui, après une certaine temporisation, entraîne à son tour le tiroir 8, ce qui assure une correction automatique de la hauteur du véhicule jusqu'à ce que la barre 3 supprime tout effort sur le tiroir 8 et que celui-ci ait repris sa position neutre de référence. Cette position dépend de la longueur du boîtier 7 et il suffit de modifier cette longueur pour modifier la hauteur de référence de l'essieu.

La hauteur de chacun des essieux avant et arrière peut être modifiée par la manœuvre d'une même molette 13 qui est reliée à chacun des boîtiers 7 par deux câbles sous gaine 14a-14b ou 14'a-14'b, les gaines étant visibles respectivement en 15a-15b et 15'a et 15'b.

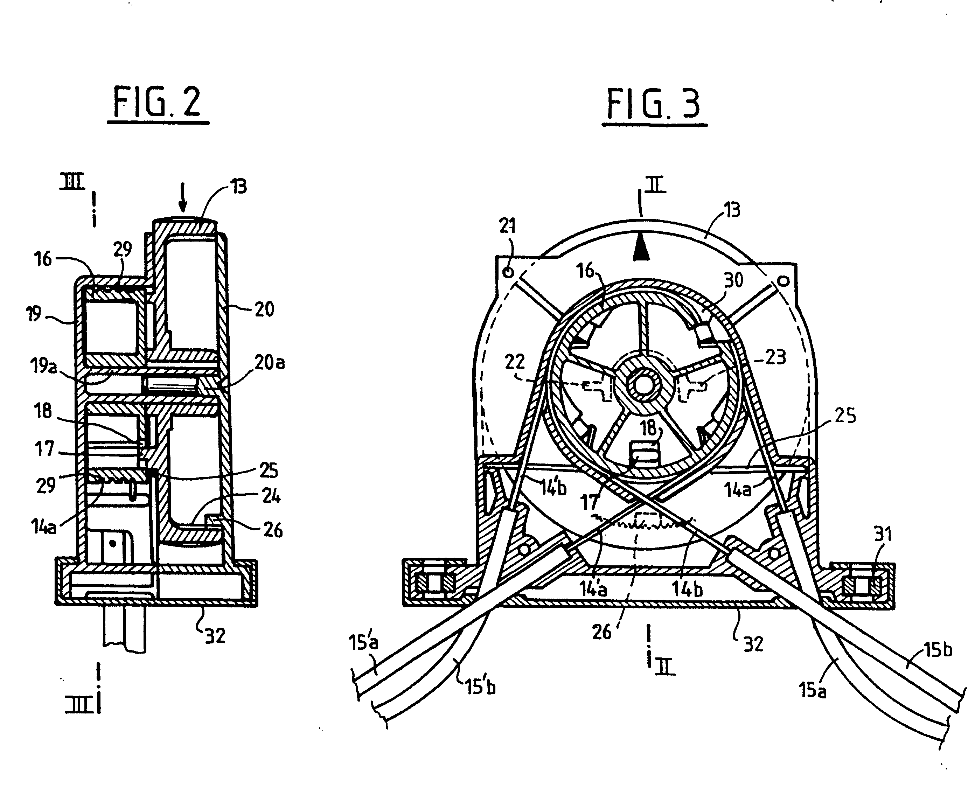

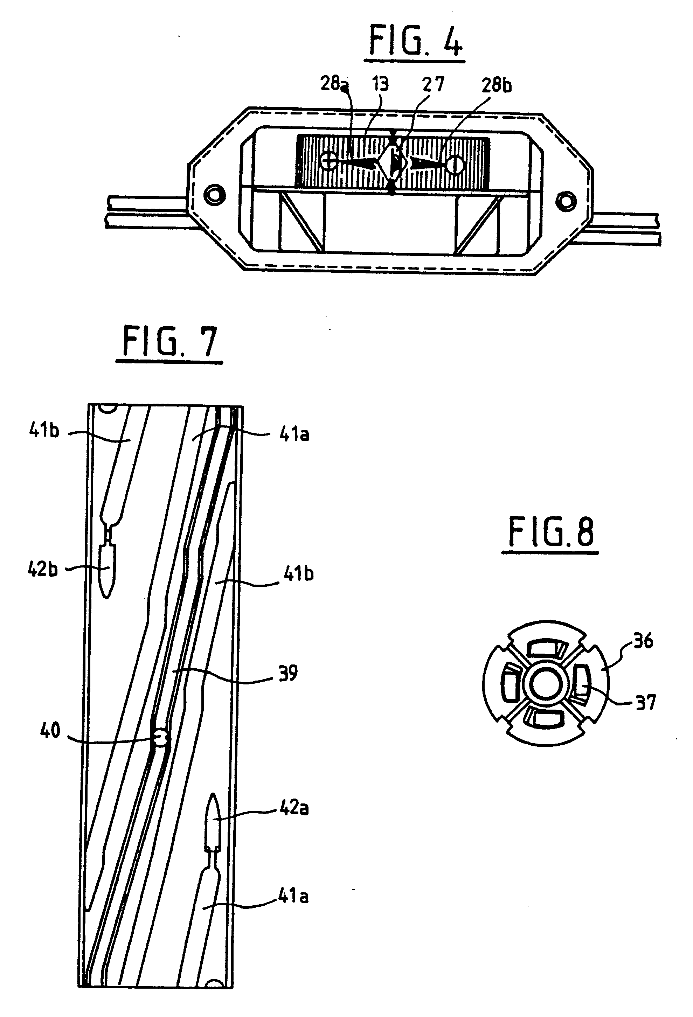

Comme on le voit plus particulièrement aux Figures 2 à 4, la molette 13 est solidaire angulairement d'un tambour 16 grâce à un doigt 17 de la molette qui est engagé dans une boutonnière 18 du tambour, l'ensemble étant monté à rotation dans un carter formé de deux éléments de carter 19 et 20 assemblés l'un à l'autre par exemple par des rivets creux 21. Le tambour 16 est monté pivotant sur une partie tubulaire 19a de l'élément de carter 19, un doigt de centrage 20a de l'élément de carter 20 étant emmanché dans cette partie 19a ; cette dernière est elle-même engagée dans un alésage de plus grand diamètre de la molette qui est maintenue latéralement par des guides 22 et 23, en pouvant ainsi se déplacer verticalement. La partie interne de la molette comporte des crans 24 et un ressort 25 interposé entre la molette et l'élément de carter 20, tend à maintenir un cran 26 de l'élément 20 dans les crans 24. La molette est ainsi normalement empêchée de tourner mais on peut la faire pivoter en exerçant une pression sur elle de façon à dégager le cran 26 des crans 24. La périphérie de cette molette comporte des repères de position 27 ainsi que des flèches 28a et 28b dirigées en sens opposé (Figure 4) qui indiquent les sens de montée et de descente.

Le tambour 16 comporte quatre gorges 29 pour l'enroulement des câbles 14a, 14b, 14'a et 14'b ainsi que quatre cavitités 30 pour l'accrochage de ces câbles. Les ancrages sont décalés pour que les arcs enroulés soient les mêmes malgré les directions différentes des câbles. Les gaines des câbles sont logées dans des encoches de profondeurs différentes de l'élément de carter 19 et y sont maintenues par des saillies prévues sur l'élément de carter 20. Les références 31 et 32 désignent respectivement des écrous emprisonnés entre les deux éléments de carter pour permettre leur fixation sur le véhicule, et un élément en caoutchouc qui assure à la fois l'étanchéité entre les deux éléments de carter, avec les gaines des câbles et avec le plancher du véhicule.

Le boîtier de longueur variable 7 est constitué par un corps 33 qui est attelé par une rotule 34 au tiroir 8 du correcteur de hauteur 9 et dans lequel une came cylindrique 35 peut pivoter et coulisser.

La rotule 34 est vissée sur l'extrémité du tiroir 8 et est logée dans une cavité hémisphérique du corps 33 ; un flasque 36 comportant aussi un logement hémisphérique retient la rotule sur le corps et est lui-même verrouillé par un système à quadruple baïonnette 37. Un soufflet 38 assure l'étanchéité de la liaison articulée du tiroir et du corps.

La périphérie de la came 35 comporte une rainure de guidage hélicoïdale 39 dans laquelle peut coulisser un doigt 40 solidaire du corps, et deux rainures hélicoïdales 41a et 41b dans lesquelles sont disposés les câbles 14a et 14b enroulés en sens inverse ; ces rainures ont à leurs extrémités opposées des logements 42a et 42b pour l'ancrage des embouts 43 des câbles et ont un profil avec des portions planes au niveau des positions d'arrêt, cela afin d'éviter toutes imprécisions de longueur du boîtier à ses diverses positions et également d'empêcher toute réaction de réversibilité. Les deux rainures ont des profils semblables mais décalés l'un par rapport à l'autre. Chaque gaine de câble prend appui sur le fond d'une cavité du corps 33, un ressort 44 étant interposé entre la gaine et le fond de la cavité pour assurer une tension des câbles. Une poche de protection 45 enveloppe les extrémités des câbles et leurs gaines pour assurer l'étanchéité de ces gaines avec le corps 33. On voit de ce qui précède qu'une traction sur l'un ou l'autre des câbles 14a et 14b fait tourner la came 35 dans un sens ou dans l'autre et qu'en même temps cette came se déplace axialement dans le corps 33.

La came 35 présente deux épaulements intérieurs 46a et 46b dont l'un 46a est rapporté, afin de permettre le montage, par exemple par soudure à ultra-sons si les pièces sont en matière plastique. Deux coupelles 47 et 48 sont maintenues en appui sur ces épaulements par un ressort précomprimé 6. La coupelle 47 située du côté du correcteur de hauteur comporte une queue axiale 47a qui est engagée dans un embout 50 en appui sur la coupelle 48. Deux goupilles tangentielles 51 engagées dans des perçages de l'embout 50 et sur lesquelles prend appui un épaulement annulaire de la queue 47a de la coupelle 47, assurent la transmission à l'embout 50 des efforts d'augmentation de longueur du boîtier 7, sans gêner le pivotement de la came.

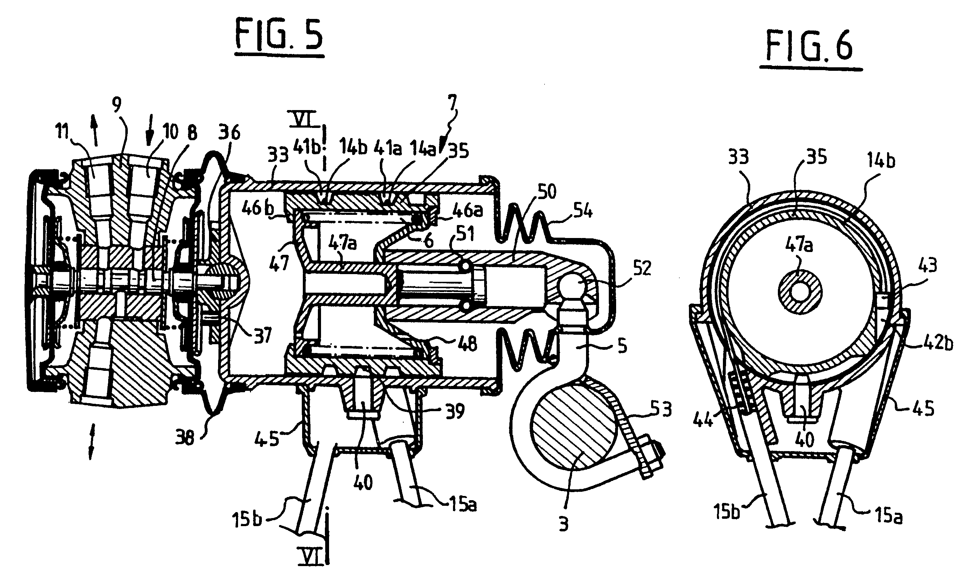

Le levier 5 de la barre anti-devers 3 présente à son extrémité libre une rotule 52 clipsée dans l'embout 50 ; dans le mode de réalisation de la Figure 5, il est fixé à la barre par une bride 53. Un soufflet en caoutchouc 54 assure l'étanchéité de l'articulation.

Lors d'une variation de hauteur du véhicule, le levier 5 tire ou pousse l'embout 50 ; celui-ci tire la coupelle 47 par l'intermédiaire de sa queue 47a ou pousse la coupelle 48 ; dans les deux cas le ressort 6 est comprimé car le correcteur de hauteur 9 étant temporisé, son tiroir 8 ne peut se déplacer instantanément et il en est de même du corps 33 attelé à ce tiroir et de la came 35 empêchée de se déplacer axialement par rapport au corps par l'engagement du doigt 40 dans la rainure. Le ressort 6 absorbe donc les mouvements et applique un certain effort au tiroir 8, dans un sens ou dans l'autre, ce qui entraîne au bout d'un certain temps l'ouverture à l'admission ou à l'échappement du correcteur de hauteur, donc la correction automatique de la hauteur du véhicule jusqu'à ce que la barre 3 supprime l'effort sur le tiroir et que celui-ci ait repris sa position neutre fermée.

Pour modifier la hauteur du véhicule, il suffit de faire pivoter la molette 13 dans le sens désiré. Le mouvement de cette molette est transmis à la came 35 de chaque essieu. Par suite de l'engagement du doigt 40 dans la rainure 39, la came se déplace axialement par rapport au corps 33, ce qui fait varier la longueur du boîtier 7 et décale la position fermée du tiroir 8 par rapport à la position angulaire de la barre anti-devers 3.

## Revendications

1. Dispositif de commande de hauteur à la fois automatique et manuel pour véhicule automobile à suspension hydropneumatique comportant par essieu un correcteur de hauteur (9) à tiroir hydraulique temporisé (8) propre par déplacement du tiroir, de part et d'autre d'une position neutre de référence, à relier le circuit hydraulique de suspension (12) à une source de pression ou à un réservoir de manière à modifier la hauteur de l'essieu, le circuit de suspension étant isolé à la fois de la source de pression et du réservoir lorsque le tiroir est dans sa position neutre, un levier (5) monté pivotant en fonction de la hauteur de l'essieu, des moyens élastiques (7) interposés entre le levier (5) et le tiroir (8), et des moyens manuels de commande (13) agissant sur les moyens élastiques (7) pour modifier la distance au repos entre le tiroir (8) et le levier (5), caractérisé en ce que le levier (5) et le tiroir (8) sont reliés l'un à l'autre par un boîtier élastique précontraint (7) qui est relié par des rotules (34 et 52) au tiroir (8) du correcteur de hauteur et au levier (5) et qui comprend un corps (33) et une came cylindrique (35) pouvant pivoter et coulisser l'un par rapport à l'autre et liés l'un à l'autre par des moyens tels qu'un pivotement de la came entraîne son coulissement, et en ce qu'il est prévu pour chaque essieu deux cables (14a-14b ou 14'a-14'b) dont chacun est fixé par l'une de ses extrémités à la périphérie d'un tambour (16) manoeuvré manuellement et par son autre extrémité à la périphérie de la came cylindrique (35). -

2. Dispositif de commande de hauteur selon la revendication 1, caractérisé en ce que la came (35) est munie intérieurement de deux épaulements écartés (46a et 46b) sur lesquels butent deux coupelles (47 et 48) entre lesquelles est disposé un ressort hélicoïdal (6), et des moyens pour que l'allongement comme le raccourcissement du boîtier (7) engendre une compression du ressort (6) par déplacement de l'une ou l'autre des deux coupelles (47 et 48), la came (35) étant munie de moyens pour transmettre au boîtier (7) l'effort du ressort.

3. Dispositif de commande de hauteur selon la revendication 2, caractérisé en ce que le boîtier (7) comporte un embout coaxial (50) rotulé par l'une de ses extrémités au levier pivotant (5), l'autre extrémité de l'embout étant en butée sur la coupelle (48) située du même côté de manière à comprimer le ressort (6), quand le levier (5) pivote dans le sens de raccourcissement du boîtier (7).

4. Dispositif de commande de hauteur selon la revendication 2 ou 3, caractérisé en ce que la coupelle (47) située du côté du correcteur (9) comporte une queue (47a) traversant la coupelle (48) située du côté du levier et qui s'engage dans un alésage axial de l'embout (50) lui-même muni d'un moyen (51) propre à entraîner la coupelle (47) quand le levier (5) pivote dans le sens de l'allongement du boîtier (7).

5. Dispositif de commande de hauteur selon l'une des revendications précédentes, caractérisé en ce que la came cylindrique (35) comporte une première rainure (41a) faisant approximativement un tour selon un profil hélicoïdal pour guider un des câbles et une deuxième rainure (41b) de même longueur pour guider l'autre câble enroulé en sens inverse.

6. Dispositif de commande de hauteur selon la revendication 5, caractérisé en ce que la came cylindrique (35) comporte une troisième rainure pratiquement hélicoïdale (39) dans laquelle est engagé un doigt (40) solidaire du corps (33).

## Patentansprüche

1. Vorrichtung zur automatischen und manuellen Höheneinstellung für Kraftfarzeuge mit hydrophneumatischer Aufhängung mit einem Höhenregler (9) mit verzögertem hydraulischem Schieber (8) pro Achse, der geeignet ist, durch Verstellung des Schiebers beiderseits einer neutralen Bezugsstellung den Hydraulikkreis (12) für die Aufhängung mit einer Druckquelle oder einem Behälter in der Weise zu verbinden, daß die Höhe der Achse verändert wird, wobei der Hydraulikkreis für die Aufhängung gleichzeitig von der Druckquelle und vom Behälter isoliert ist, wenn sich der Schieber in der neutralen Stellung befindet, wobei ein Hebel (5) in Abhängigkeit von der Höhe der Achse schwenkbar angebracht ist, wobei eine federnde Einrichtung (7) zwischen dem Hebel (5) und dem Schieber (8) eingesetzt ist, und mit einer manuellen Steuereinrichtung (13), die auf die federnde Einrichtung (7) einwirkt, um den Ruhestellungsabstand zwischen dem Schieber (8) und dem Hebel (5) zu verändern, dadurch gekennzeichnet, daß der Hebel (5) und der Schieber (8) durch ein federndes vorgespanntes Gehäuse (7) verbunden sind, das durch Kugelgelenke (34 und 52) mit dem Schieber (8) des Höhenreglers und dem Hebel (5) verbunden ist und eine Hülse (33) und einen zylindrischen Kamm (35) umfaßt, die sich gegeneinander verdrehen und verschieben können und miteinander durch eine Einrichtung verbunden sind dergestalt, daß eine Drehung des Kammes seine Verschiebung zur Folge hat, und daß für jede Achse zwei Kabel (14a-14b oder 14'a-14'b) vorgesehen sind, von denen jedes mit einem seiner Enden am Umfang einer manuell betätigten Trommel (16) und mit seinem anderen Ende am Umfang des zylindrischen Kammes (35) befestigt ist.

2. Vorrichtung zur Höheneinstellung nach Anspruch 1, dadurch gekennzeichnet, daß der Kamm (35) im Inneren mit zwei mit Abstand angeordneten Schultern (46a) und (46b) versehen ist, an denen zwei Schalen (47 und 48) anliegen, zwischen denen eine Schraubenfeder (6) angeordnet ist, und durch eine Einrichtung der Art, daß die Verlängerung und die Verkürzung des Gehäuses (7) eine Zusammendrückung der Feder (6) durch Verschiebung der einen oder der anderen der beiden Schalen (47 und 48) zur Folge hat, wobei der Kamm (35) mit einer Einrichtung zur Übertragung der Federkraft auf das Gehäuse (7) versehen ist.

3. Vorrichtung zur Höheneinstellung nach Anspruch 2, **dadurch gekennzeichnet,** daß das Gehäuse (7) einen koaxialen Ansatz (50) aufweist, der mit einem seiner Enden gelenkig am Kugelkopf des schwenkbaren Hebels (5) angreift, während sich das andere Ende an der Schale (48) abstützt, die an derselben Seite angeordnet ist, so daß die Feder (6) komprimiert wird, wenn der Hebel (5) in Richtung einer Verkürzung des Gehäuses (7) geschwenkt wird.

4. Vorrichtung zur Höheneinstellung nach Anspruch 2 oder 3, **dadurch gekennzeichnet,** daß die auf der Seite des Reglers (9) angeordnete Schale (47) ein Endstück (47a) aufweist, das die auf der Seite des Hebels angeordnete Schale (48) durchdringt, und in eine axiale Bohrung des Ansatzes (50) eingreift, der selbst mit einer Einrichtung (51) versehen ist, die imstande ist, die Schale (47) mitzunehmen, wenn der Hebel (5) in Richtung einer Verlängerung des Gehäuses (7) verschwenkt wird.

5. Vorrichtung zur Höheneinstellung nach einem der vorhergehenden Ansprüche, **dadurch gekennzeichnet,** daß der zylindrische Kamm (35) eine erste Nut (41a) mit einem annähernd helicoidalen Profil zur Führung der Kabel und eine zweite Nut (41b) mit derselben Länge aufweist, um das andere entgegengesetzt aufgewickelte Kabel zu führen.

6. Vorrichtung zur Höheneinstellung nach Anspruch 5, **dadurch gekennzeichnet,** daß der zylindrische Kamm (35) eine dritte zweckmäßig helicoidale Nut (39) aufweist, in die ein mit der Hülse (33) kraftschlüssig verbundener Finger (40) eingreift.

## Claims

1. Manual and automatic height-control device for a motor vehicle with hydropneumatic suspension and comprising for each axle a height corrector (9) with a time-delayed hydraulic slide valve (8) and able, by a movement of the slide valve on both sides of a reference neutral position, to connect the hydraulic suspension circuit (12) to a pressure source or tank so as to modify the height of the axle, the suspension circuit being separated from both the pressure source and the tank when the slide valve is in its neutral position, a level (5) mounted pivoting according to the height of the axle, elastic means (7) inserted between the lever (5) and the slide valve (8), and manual control means (13) acting on the elastic means (7) so as to modify the distance at rest between the slide valve (8) and the lever (5), wherein the lever (5) and the slide valve (8) are interconnected by a prestressed elastic casing (7) connected by joints (34 and 52) to the slide valve (8) of the height corrector and to the lever (5) and which includes a body (33) and a cylindrical cam (35) able to pivot and slide with respect to one another by means so that a pivoting of the cam results in it sliding, and wherein two cables (14a-14b or 14'a-14'b) are provided, each cable being fixed via one of its extremities to the periphery of a drum controlled manually and via its other extremity to the periphery of the cylindrical cam (35).

2. Height control device according to claim 1, wherein the cam (35) is internally provided with two spaced shoulders (46a and 46b) on which two cups (47 and 48) abut between which a helical spring (6) is disposed, and means so that the lengthening, as well as the shortening, of the casing (7) generates a compression of the spring (6) via the movement of either of the two cups (47 and 48), the cam (35) being provided with means to transmit the force of the spring to the casing (7).

3. Height control device according to claim 2, wherein the casing (7) comprises a coaxial end piece (50) joined by one of its extremities to the pivoting lever (5), the other extremity of the end piece abutting against the cup (48) situated on the same side so as to compress the spring (6) when the lever (5) pivots in the direction for shortening of the casing (7).

4. Height control device according to claim 2 or 3, wherein the cup (47) situated on the side of the corrector (9) comprises a tail (47a) traversing the cup (48) situated on the side of the lever and which is engaged in an axial bore of the end piece (50) provided with a device (51) able to move the cup (47) when the lever (5) pivots in the direction for prolonging the casing (7).

5. Height control device according to any one of the preceding claims, wherein the cylindrical cam (35) comprises a first groove (41a) making approximately one revolution along a helical profile so as to guide one of the cables, and a second groove (41b) of the same length so as to guide the other cable wound in the opposite direction.

6. Height control device according to claim 5, wherein the cylindrical cam (35) comprises an almost helical third groove (39) in which a finger (40) integral with the body (33) is engaged.

# FIG.1

EP 0 300 869 B1

FIG. 3

FIG. 2

## FIG. 4

28a  13  27  28b

## FIG. 7

41b
41a
42b
41b
39
40
42a
41a

## FIG.8

36
37

EP 0 300 869 B1

## FIG. 5

## FIG. 6